# EUROPEAN PATENT SPECIFICATION

(11) **EP 1 967 548 B1**
(45) Date of publication and mention of the grant of the patent: **02.06.2010**
(21) Application number: 08152349.0
(22) Date of filing: 06.03.2008
(51) Int. Cl.: C08L 23/14, C08K 3/00, C08K 5/00, C08K 3/22, C08K 3/26, C08K 3/34, C08K 5/098, C08K 5/134, C08K 5/372, C08K 5/524

(54) **Polypropylene Composition**
Polypropylen-Zusammensetzung
Composition de polypropylène

(30) Priority: 07.03.2007 JP 2007056888
(43) Date of publication of application: 10.09.2008
(73) Proprietor: Sumitomo Chemical Company, Limited, Tokyo 104-8260 (JP)
(72) Inventor: Kimura, Kenji, Toyonaka-shi Osaka 560-0021 (JP)
(74) Representative: Vossius & Partner

(56) References cited:
- US-A1- 2003 216 499
- US-A1- 2003 236 337
- US-A1- 2006 122 295
- HARUNA T: "ASPECTS OF STABILIZATION WITH PHOSPHOROUS ANTIOXIDANTS IN POLYMERS" ANGEWANDTE MAKROMOLEKULARE CHEMIE. APPLIED MACROMOLECULARCHEMISTRY AND PHYSICS, WILEY VCH, WEINHEIM, DE, vol. 232, 1 October 1995 (1995-10-01), pages 119-131, XP000533987 ISSN: 0003-3146

## Description

The present invention relates to a polypropylene composition.

Since polypropylene has the excellent physical, chemical and electrical properties, it has been recently used in a variety of fields such as case bodies for electronic parts, electric parts and automobile parts.

In order to improve stability of polypropylene to thermal oxidation and improve such coloration resistance that polypropylene is not colored even when it is exposed under a nitrogen oxide (NOₓ) atmosphere, a polypropylene composition in which an inorganic filler, a phenol-based antioxidant, a sulfur-based antioxidant, an amide-based compound and a bisphenol A type glycidyl ether-based epoxy compound are added to polypropylene is proposed in Patent Publication 1.

### [Patent Publication 1]

JP 05-271481A (Claim 1, Problems to be solved by the invention)

Recently, a polypropylene composition with improved stability to thermal oxidation and improved coloration resistance has been demanded.

An object of the present invention is to provide a polypropylene composition which is excellent in mechanical property, and is further excellent in both properties of stability to thermal oxidation, and coloration resistance.

The present inventors studied and, as a result, found out that a polypropylene composition in which a metal silicate salt is used as an inorganic filler, a specified phosphorus-based antioxidant is used as an antioxidant, and a bisphenol A type glycidyl ether-based epoxy compound and a carboxylic acid amide-based compound are adjusted to specified amounts or smaller can solve such the problems.

That is, the present invention provides the following [1] to [6].
[1] A polypropylene composition comprising 0.001 to 0.5 part by weight of at least one kind of neutralizing agent selected from the group consisting of hydrotalcites, metal hydroxide and a carboxylic acid metal salt, 0.02 to 0.1 part by weight of a phenol-based antioxidant represented by the formula (1), 0.02 to 0.2 part by weight of a sulfur-based antioxidant represented by the formula(2), 0.02 to 0.2 part by weight of at least one kind of phosphorus-based antioxidant selected from the group consisting of a compound represented by the formula (3) and a compound represented by the formula (4), 0.2 to 0.6 part by weight of a metal silicate salt, and 100 parts by weight of polypropylene, provided that, when a bisphenol A type glycidyl ether-based epoxide compound represented by the formula(5) and/or carboxylic acid amide having a carbon number of 8 to 50 are (is) contained in the composition, a content of the bisphenol A type glycidyl ether-based epoxide compound represented by the formula (5) is 0.001 part by weight or less, and a content of the carboxylic acid amide having a carbon number of 8 to 50 is 0.001 part by weight or less. 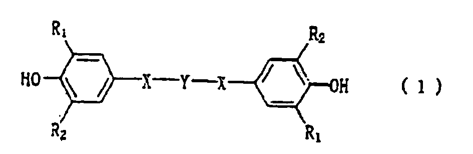 [In the formula (1) , R₁s each represent independently a linear alkyl group having a carbon number of 1 to 8, or a branched alkyl group having a carbon number of 3 to 8, R₂s represent a methyl group, X represents a -C₂H₄COO- group, and Y represents a triethylene glycol residue or a 3,9-bis(1,1-dimethyl-2-hydroxyethyl)-2,4,8,10-tetraoxaspiro[5.5]undecane residue,

   (R₃-A-S-C₂H₄CO₂)ₘ-Z (2)

   [In the formula (2), R₃ represents an alkyl group having a carbon number of 12 to 18, A represents a single bond or a -C₂H₄CO₂-group, m represents an integer of 1 to 4, and Z represents a dodecyl alcohol residue, a tetradecyl alcohol residue, an octadecyl alcohol residue, or a pentaerythritol residue] 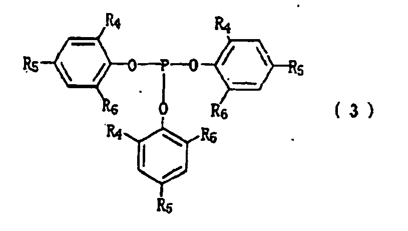 [In the formula (3), R₄s, R₅s and R₆s each represent independently a hydrogen atom, a linear alkyl group having a carbon number of 1 to 9, or a branched alkyl group having a carbon number of 3 to 9] 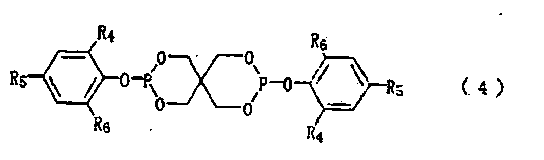 [In the formula (4), R₄s, R₅s and R₆s are as defined above] 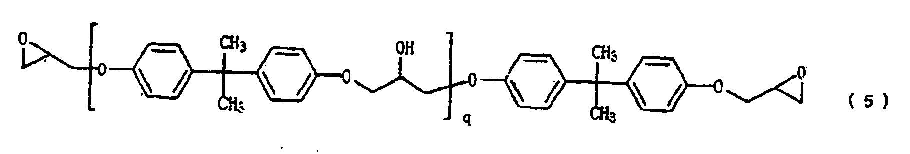 [In the formula (5), q represents a number of 0 or more]
[2] The composition according to [1], wherein the composition does not substantially contain the bisphenol A type glycidyl ether-based epoxide compound represented by the formula (5) and the carboxylic acid amide having a carbon number of 8 to 50.
[3] The composition according to [1], wherein the neutralizing agent is a carboxylic acid metal salt having a carbon number of 8 to 22.
[4] The composition according to [1], wherein the neutralizing agent is hydrotalcites.
[5] A method of stabilizing a polypropylene composition, comprising melt-kneading a composition comprising 0.001 to 0.5 part by weight of at least one kind of neutralizing agent selected from the group consisting of hydrotalcites, metal hydroxide and a carboxylic acid metal salt, 0.02 to 0.1 part by weight of a phenol-based antioxidant represented by the formula (1), 0.02 to 0.2 part by weight of a sulfur-based antioxidant represented by the formula (2), 0.02 to 0.2 part by weight of at least one kind phosphorus-based antioxidant selected from the group consisting of a compound represented by the formula (3) and a compound represented by the formula(4), 0.2 to 0.6 part by weight of a metal silicate salt, and 100 parts by weight of polypropylene, provided that, when a bisphenol A type glycidyl ether-based epoxy compound represented by the formula (5) and/or carboxylic acid amide having a carbon number of 8 to 50 are (is) contained in the composition, a content of the bisphenol A type glycidyl ether-based epoxy compound represented by the formula(5) is 0.001 part by weight or less, and a content of the carboxylic acid amide having a carbon number of 8 to 50 is 0.001 part by weight or less.
[6] The method according to [5], wherein the composition does not substantially contain the bisphenol A type glycidyl ether-based epoxy compound represented by the formula (5) and the carboxylic acid amide having a carbon number of 8 to 50.

The present invention will be explained in detail below.

The propylene composition of the present invention contains the neutralizing agent at 0.001 to 0.5 part by weight, preferably 0.01 to 0.3 part by weight, particularly preferably 0.02 to 0.2 part by weight based on 100 parts by weight of polypropylene. When the neutralizing agent is 0.001 part by weight or more, there is a tendency that corrosion of an instrument used upon processing of the polypropylene composition is reduced for a long period of time, and there is a tendency that, when the present composition is molded, appearance deterioration such as occurrence of roughening of a surface, eye discharge and the like is reduced, being preferable. When the neutralizing agent is 0.5 part by weight or less, there is a tendency that a modulus and a loading deflection temperature of a molded article of the polypropylene are improved to improve mechanical property, that an embrittlement life of a gear oven (hereinafter, referred to as GO embrittlement life in some cases) is prolonged, and stability to thermal oxidation is improved, and that NOₓ coloring property is improved, being preferable.

Herein, the neutralizing agent refers to at least one kind selected from the group consisting of hydrotalcites such as synthetic hydrotalcite, and natural hydrotalcite; metal hydroxide such as calcium hydroxide; carboxylic acid metal salt such as calcium stearate, calcium palmitate, aluminum stearate, zinc stearate, calcium myristate, calcium laurate, and magnesium stearate.

Among them, a carboxylic acid metal salt having a carbon number of 8 to 22, and hydrotalcites are preferable, and hydrotalcite, calcium stearate, and calcium palmitate are particularly preferable.

The polypropylene composition of the present invention contains the phenol-based antioxidant represented by the formula(1) at 0.02 to 0.1 part by weight, based on 100 parts by weight of polypropylene.

In the formula (1), R₁S and R₂S each represent independently a linear or branched alkyl group having a carbon number of 1 to 8. Examples of the alkyl group include a methyl group, an ethyl group, an isopropyl group, a t-butyl group, a t-pentyl group, and a t-octyl group. As R₁, inter alia, a branched alkyl group having a carbon number of 3 to 8 is preferable, and a t-butyl group, a t-pentyl group and a t-octyl group are particularly preferable.

R₂ is a methyl group.

X represents a -C₂H₄COO- group. Usually, an ester group side of X is bound to Y.

Y represents a triethylene glycol residue, or a
3,9-bis(1,1-dimethyl-2-hydroxyethyl)-2,4,8,10-tetraoxaspiro [5.5]undecane residue.

Embodiments of the phenol-based antioxidant (1) include 3,9-bis[2-{3-(3-t-butyl-4-hydroxy-5-methylphenyl)propionylo xy}-1,1-dimethylethyl]-2,4,8,10-tetraoxaspiro[5.5]undecane( hereinafter, referred to as (1-1) in some cases).

The polypropylene composition of the present invention contains the sulfur-based antioxidant represented by the formula(2) at 0.02 to 0.2 part by weight, based on 100 parts by weight of polypropylene.

In the formula (2), R₃ represents an alkyl group having a carbon number of 12 to 18 such as a dodecyl group, a tetradecyl group, and an octadecyl group. A represents a single bond or a -C₂H₄CO₂- group and m represents an integer of 1 to 4.

Z represents a dodecyl alcohol residue, a tetradecyl alcohol residue, an octadecyl alcohol residue, or a pentaerythritol residue, and m represents an integer of 1 to 4.

Embodiments of the sulfur-based antioxidant (2) include 3,3'-thiodipropionic acid di-n-dodecyl ester, 3,3'-thiodipropionic acid di-n-tetradecyl ester, 3,3'-thiodipropionic acid di-n-octadecyl ester, and

The polypropylene composition of the present invention contains the phosphorus-based antioxidants represented by the formula(3) and the formula(4) at a total of 0.02 to 0.2 part by weight, based on 100 parts by weight of polypropylene. As the phosphorus-based antioxidant, only any one of the phosphorus-based antioxidant represented by the formula (3) and the phosphorus-based antioxidant represented by the formula (4) may be used.

In the formulas (3) and (4), R₄S, R₅S and R₆S each represent independently a hydrogen atom, or a linear or branched alkyl group having a carbon number of 1 to 9. Inter alia, examples include a hydrogen atom, a methyl group, a t-butyl group, a t-pentyl group, a t-octyl group, and a nonyl group. Among them, a hydrogen atom, a methyl group and a t-butyl group are preferable.

Examples of the phosphorus-based antioxidant (3) include tris(nonylphenyl) phosphite, and tris(2,4-di-t-butylphenyl) phosphite (hereinafter, referred to as (3-1) in some cases).

Examples of the phosphorus-based antioxidant (4) include bis(2,4-di-t-butylphenyl) pentaerythritol diphosphite (hereinafter, referred to as (4-1) in some cases), and bis(2,6-di-t-butyl-4-methylphenyl) pentaerythritol diphosphite.

The polypropylene composition of the present invention is such that a content of the bisphenol A type glycidyl ether-based epoxy compound represented by the formula (5) is 0.001 part by weight or less based on 100 parts by weight of polypropylene. By adopting a content of the epoxy compound being 0.001 part by weight or less, there is a tendency that when the present composition is molded, a hue of the molded article is improved, being preferable.

Herein, q in the epoxy compound (5) is 0 or more, preferably 10 to 50. The epoxy compound is a product obtained by reacting bisphenol A and epichlorohydran with a dehydrochlorinating agent such as sodium hydroxide, and the epoxy compound usually having q=about 35 is commercially available.

It is preferable that the polypropylene composition of the present invention does not substantially contain the epoxy compound.

The polypropylene composition of the present invention is usually such that a content of a carboxylic acid amide compound having a carbon number of 8 to 50 is 0.001 part by weight or less based on 100 parts by weight of polypropylene. It is preferable that the polypropylene composition of the present invention does not substantially contain the carboxylic acid amide compound. By adopting a content of the carboxylic acid amide being 0.001 part by weight or less, there is a tendency that, when the present composition is molded, a hue of the molded article is improved, being preferable.

Embodiments of the carboxylic acid amide-based compound in the present invention include saturated monocartoxylic acid amide such as erucic acid amide, and stearic acid amide, unsaturated monocarboxylic acid amide such as oleic acid amide, and behenic acid amide, saturated dicarboxylic acid amide such as N-stearylbutyric acid amide, N-stearyllauric acid amide, and N-stearylbehenic acid amide, and unsaturated dicarboxylic acid amide such as N-oleyloleic acid amide, N-oleylbehenic acid amide, N-butylerucic acid amide, N-octylerucic acid amide, N-laurylerucic acid amide, ethylenebisstearic acid amide, ethylenebisoleic acid amide, hexamethylenebisoleic acid amide, N, N' -dioleyladipic acid amide, and N, N'-dioleylsebacic acid amide.

The polypropylene composition of the presert invention contains a metal silicate salt at 0.2 to 0.6 part by weight based on 100 parts by weight of polypropylene.

As used herein, the metal silicate salt refers to a salt of at least one kind metal selected from the group consisting of an alkali metal such as sodium and potassium, a metal belonging to II Group elements such as calcium and magnesium, a metal belonging to III Group elements such as aluminum, iron, and manganese, with silicic acid. Among them, magnesium silicate, aluminum silicate, or mica which is a silicate salt of aluminum, potassium, magnesium, sodium, and iron is preferable due to easy availability. Particularly, magnesium silicate is preferable due to a tendency that low temperature impact property, moldability and coating property are improved.

Examples of aluminum silicate include natural aluminum silicate such as kaolin, agalmatolite, sericite, bentonite and fired clay, and synthetic aluminum silicate such as zeolite, Zeolex, and Silteg.

Examples of magnesium silicate include talc.

The metal silicate salt has an average particle diameter of usually around 0.5 to 30 µm, preferably 1 to 20 µm. When the average particle diameter is 0.5 µm to 30 µm, there is a tendency that dispersibility in polypropylene is better, and impact resistance of the resulting polypropylene is improved, being preferable. Herein, an average particle diameter of the metal silicate salt is a value measured with a sedimentation type automatic particle size distribution measuring instrument.

A water content of the metal silicate salt is usually around 0.1 to 1 % by weight, preferably around 0.1 to 0.3 % by weight. When the water content is 0.1 % by weight or more, availability and storage are easy, being preferable. When the water content is 1 % by weight or less, there is a tendency that trouble such as expansion at polypropylene processing is reduced, being preferable. Herein, the water content of the metal silicate salt is a value measured with a Karl Fischer's method.

Polypropylene used in the present invention is a polyolefin which contains a structural unit derived from propylene as a main component and may further contain a structural unit derived from ethylene, a structural unit derived from an α-olefin other than propylene such as 1-butene, 1-hexene, 3-methyl-1-pentene, and 4-methyl-1-pentene, a structural unit derived from a diene compound such as butadiene, ethylidenenorbornene, and dicyclopentadiene, a structural unit derived from (meth)acrylic acids such as (meth)acrylic acid, methyl (meth)acrylate, ethyl (meth)acrylate, and ethylhexyl (meth)acrylate, a structural unit derived from a vinyl compound such as styrene, vinyl chloride, vinyl acetate, and vinyl versatate, and acid anhydride such as maleic anhydride, and succinic anhydride.

Additionally, a polyolefin other than propylene such as polyethylene, polystyrene, and a synthetic rubber may be incorporated into the composition of the present invention. In order that mechanical property such as a bending modulus and a thermal deformation temperature, stability to thermal oxidation, and a hue of the resulting present composition are excellent, a content of other polyolefin is usually 10 parts by weight or less, preferably 1 part by weight or less, particularly preferably 0.1 part by weight or less based on 100 parts by weight of polypropylene.

Other additives may be further incorporated into the composition of the present invention in such a range that performance of the polypropylene composition is not influenced.

Specifically, examples include a light stabilizer such as 2-hydroxy-4-n-octoxybenzophenone, 2-(2-hydroxy-5-methyl phenyl)benzotriazole,
2-(3-t-butyl-2-hydroxy-5-methylphenyl)-5-chlorobenzotriazol e, 2,4-di-t-butylphenyl 3,5-di-t-butyl-4-hydroxybenzoate, bis(2,2,6,6-tetramethyl-4-piperidyl) sebacate,dimethyl succinate.
1-(2-hydroxyethyl)-4-hydroxy-2,2,6,6-tetramethylpiperidine polycondensate, and poly[{6-(1,1,3,3-tetramethyl butyl)amino-1,3,5-triazin-2,4-diyl} {(2,2,6,6-tetramethyl-4-piperidyl) imino}hexamethylene{(2,2,6,6-tetramethyl-4-piperi dyl)imino}],
a lubricant such as paraffin, low molecular weight polyethylene wax (molecular weight 10000 or less), low molecular weight polypropylene wax(molecular weight 10000 or less), stearic acid, butyl stearate, hydrogenated castor oil, and stearyl alcohol,
a cationic antistatic agent such as a primary amine salt, a tertiary amine salt, a quaternary amine salt and a pyridine derivative,
an anionic antistatic agent such as sulfated oil, soap, sulfated ester oil, sulfated amide oil, sulfated ester salts of olefin, aliphatic alcohol sulfuric acid ester salts, alkylsulfate ester salts, fatty acid ethylsulfonate salt, alkyl naphthalenesulfonate salt, alkyl benzenesulfonate salt,succinic acid ester sulfonate salt and phosphoric acid ester salt,
a nonionic antistatic agent such as partial fatty acid ester of polyhydric alcohol, ethylene oxide adduct of fatty alcohol, ethylene oxide adduct of fatty acid, ethylene oxide adduct of aliphatic amine or fatty acid amide, ethylene oxide adduct of alkylphenol, ethylene oxide adduct of partial fatty acid ester of polyhydric alcohol, and polyethylene glycol,
an amphoteric antistatic agent such as carboxylic acid derivative and imidazoline derivative,
an anti-fogging agent such as stearic acid monoglyceride, oleic acid monoglyceride, polyglycerin oleic acid ester, sorbitan monolaurate, and sorbitan monostearate,
a pigment such as carbon black, titanium oxide, phthalocyanine pigment, quinacridone pigment, isoindolinone pigment, perylene or perinine pigment, quinophthalone pigment, diketopyrrolopyrrole pigment, dioxazine pigment, disazo condensed pigment, and benzimidazolone pigment,
a flame-retardant such as decabromobiphenyl, antimony trioxide, phosphorus-based flame-retardant and aluminum hydroxide,
a nucleating agent such as sodium benzoate, sodium 2, 2'-methylene bis(4,6-di-t-butylphenyl) phosphate, and bis(p-methylbenzylidene) sorbitol.

The composition of the present invention is, for example, a mixture of the neutralizing agent, the phenol-based antioxidant (1), the sulfur-based antioxidant (2), the phosphorus-based antioxidant selected from the group consisting of the formulas (3) and (4), the metal silicate salt and polypropylene and, specifiaclly, can be obtained by dry blending with a batch-type mixing machine such as a Henschel mixer, and a supermixer.

Alternatively, a different example of the process for producing the present composition includes a process of granulating the neutralizing agent, the phenol-based antioxidant (1), the sulfur-based antioxidant (2), the phosphorus-based antioxidant selected from the group consisting of formulas (3) and (4), and the metal silicate salt, for example, by a dry extrusion granulating method, or stirring granulation, separately melt-extruding polypropylene at 190°C to 300 °C using a monoaxial or biaxial extruder, and placing the granules obtained thereupon through a side feeder to granulate into pellets.

The polypropylene composition of the present invention may be further injection-molded, or extrusion-molded through a T die while heating at 190 °C to 330 °C, preferably 200 °C to 300 °C, particularly preferably 210 °C to 280 °C.

According to the present invention, it becomes possible to provide a polypropylene composition which is excellent in all of mechanical property, stability to thermal oxidation, and coloration resistance.

### EXAMPLES

The present invention will be explained in more detail below by way of Examples. Part and % denote a weight basis unless otherwise is indicated.

As Examples and Comparative Examples, those shown in Table 1 were used.

**Table 1**

| | |
|---|---|
| Polypropylene | Propylene/ethylene block copolymer(manufactured by Sumitomo Chemical; MFR=30 g/10 min) |
| Neutralizing agent | N-1: Calcium stearate (manufactured by KYODO CHEMICAL CO., LTD. : calcium stearate) N-2: Hydrotalcite (manufactured by Kyowa Chemical Industry Co.,Ltd :DHT-4A) |
| Phenol-based antioxidant(1) | (1-1) :3,9-Bis[2-[3-(3-t-butyl-4-hydroxy-5-methylphenyl) propionytoxy}-1,1-dimethylethyl]-2.4,8,10-tetraoxaspiro [5.5]undecane(manufactured by Sumitomo Chemical: SUMILIZER GA-80) (1-2):Tetrakis[3-(3,5-di-t-butyl-4-hydroxyphenyl) propionyloxymethyl]methane(manufactured by Ciba Specialty Chemicals :IRGANOX 1010) |
| Sulfur-based antioxidant (2) | (2-1): Dimyristyl 3,3'-thiodipropionate(manufactured by Sumitomo Chemical: SUNILIZER TPM) (2-2): Tetrakis(3-laurylthiopropionyloxymethyl )methane(manufactured by Sumitomo Chemical: SUMILIZER TP-D) |
| Phosphorus-based antioxidant(3) or (4) | (3-1): Tris(2,4-di-t-butylphenyl) phosphite(manufactured by Ciba Specialty Chemicals: IRGAFOS 168) (4-1): Bis(2,4-di-t-butylphenyl)pentaerythritol diphosphite (manufactured by ADEKA CORPORATION: ADEKASTAB PEP24G) |
| Metal silicate salt | Talc(manufactured by HAYASHI KASEI Co., Ltd. MICRON WHITE 5000s) |

### (Example 1)

Into a Henschel mixer were placed 100 parts by weight of polypropylene, 0.05 part by weight of a neutralizing agent (N-1), 0.05 part by weight of a phenol-based antioxidant(1-1), 0.05 part by weight of a sulfur-based antioxidant(2-2), 0.05 part by weight of phosphorus-based antioxidant (4-1) and 0.05 part by weight of a metal silicate salt, all of which are described in Table 1, they were mixed at 1,000 rpm for 30 seconds, and then melt-extruded using a 30 mmϕbiaxial extruder to obtain a pellet-like granulated polypropylene composition.

Subsequently, the resulting composition was injection-molded, and the resulting injection-molded specimen was assessed as follow. Results are summarized in Table 3.

### (Thermal deformation temperature)

A thermal deformation temperature was measured according to JIS K 7202(1983) B Method. As this thermal deformation temperature is higher, it is meant that stability to thermal oxidation is more excellent.

### (Bending modulus)

A bending modulus was measured according to JIS K 7171 (1994) . When a bending modulus is higher, it is meant that mechanical property is more excellent.

### (Measurement of embrittlement life with gear oven)

The injection-molded specimen (40 mm x 40 mm x 1 mm) was placed into a gear oven at 150 °C, and an embrittled area on a surface was measured. Days until an embrittled area reached 30 % was adopted as an embrittlement life. As the number of days is larger, it is meant that stability to thermal oxidation is more excellent.

### (Hue)

The injection-molded specimen (40 mm x 40 mm x 1 mm) was measured for a yellowness index (YI) using a color difference meter (SPECTROPHOTOMETER CM-3500d, MINOLTA). As the number of YI is smaller, it is meant that the composition is whiter and more excellent in a hue.

### (NOₓ exposure test)

### (Preparation)

The injection-molded specimen (40 mm x 40 mm x 1mm) was hanged in a nitrogen oxide gas testing machine of a nitrogen oxide gas staining fastness tester, Model GF-5, manufactured by SUGA TEST INSTRUMENTS CO., LTD.

### (Preparation of NOₓ gas)

A NOₓ gas was generated according to JIS L 0855(1998), and the NOₓ gas was collected in a gas burette.

### (Exposure test)

Ten mL of the NOₓ gas collected in a gas burette was sampled with a gas syringe, and injected into Model GF-5. After exposure at room temperature for 7 days while a propeller was rotated, a lid was released, a test piece was taken out, and YI was measured with a color difference meter.

### (Processing stability)

The pellet (present composition) obtained by melt-kneading with a biaxial extruder was extruded with a 30 mmϕ monoaxial extruder, and the extruded pellet was extruded again with the extruder. The pellet after five times repetition extrusion with the monoaxial extruder was measured for MFR.

MFR was automatically measured according to JIS K 7210 (1976) Test Condition, Condition 14 in Table 1. As MFR is smaller, it is meant that processing stability is more excellent.

### (Examples 1 to 5, Comparative Examples 1 and 2)

As described in Table 2, by changing a content of the metal silicate salt in a range of 0 to 1 part based on 100 parts of polypropylene, compositions were obtained as in Example 1.

Assessment was performed as in Example 1, and results are shown in Table 3 together with those of Example 1.

**Table 2**

| | Polypropylene | Phenol-based antioxidant | Sulfur-based antioxidant | Phosphorus-based antioxidant | Neutralizing agent | Metal silicate salt |
|---|---|---|---|---|---|---|
| Example 1 | | (1-1) | (2-2) | (4-1) | (N-1) | |
| | 100 parts | 0.05 part | 0.05 part | 0.05 part | 0.05 part | 0.05 part |
| Example 2 | | (1-1) | (2-2) | (4-1) | (N-1) | |
| | 100 parts | 0. 05 part | 0.05 part | 0.05 part | 0.05 part | 0.1 part |
| Example 3 | | (1-1) | (2-2) | (4-1) | (N-1) | |
| | 100 parts | 0.05 part | 0.05 part | 0.05 part | 0.05 part | 0.25 part |
| Example 4 | | (1-1) | (2-2) | (4-1) | (N-1) | |
| | 100 parts | 0.05 part | 0.05 part | 0.05 part | 0.05 part | 0.5 part |
| Example 5 | | (1-1) | (2-2) | (4-1) | (N-1) | |
| | 100 parts | 0.05 part | 0.05 part | 0.05 part | 0.05 part | 0.75 part |
| Comparative Example 1 | | (1-1) | (2-2) | (4-1) | (N-1) | |
| | 100 parts | 0. 05 part | 0.05 part | 0.05 part | 0.05 part | 0.00 part |
| Comparative Example 2 | | (1-1) | (2-2) | (4-1) | (N-1) | |
| | 100 parts | 0.05 part | 0.05 part | 0.05 part | 0.05 part | 1.00 part |

**Table 3**

| | Bending modulus (Mpa) | Thermal deformation temperature (°C) | GO embrittlement life (day) | Repetition extrusion MFR (s/10min) | Initial hue YI (-) | NOx coloration YI (-) |
|---|---|---|---|---|---|---|
| Example 1 | 780 | 89 | 29 | 49 | -2.7 | 6. 6 |
| Example 2 | 803 | 90 | 2.7 | 49 | -2.7 | 6.3 |
| Example 3 | 831 | 90 | 33 | 4.2 | -2.6 | 4.7 |
| Example 4 | 817 | 95 | 27 | 42 | -2.6 | 4.7 |
| Example 5 | 868 | 98 | 25 | 41 | -2. 7 | 4. 5 |
| Comparative Example | 635 | 75 | 22 | 50 | -2.3 | 6.8 |
| Comparative Example 2 | 910 | 98 | 22 | 41 | -2.8 | 4.5 |

### (Examples 6 to 9, Comparative Examples 3 to 5)

As described in Table 4, by changing a content of the neutralizing agent in a range of 0 to 1 part based on 100 parts of polypropylene, compositions were obtained as in Example 1.

In addition to the aforementioned measurement items, roughening of a surface of an injection-molded specimen was assessed by a gloss value. Results are shown in Table 5. The gloss value was measured at an incident angle of 60° and a light receiving angle of 60° using a digital variable gloss meter manufactured by SUGA TEST INSTRUMENTS CO., LTD. As the number is larger, it is meant that roughening of a surface is smaller (smoother), and the surface is glossy.

**Table 4**

| | Polypropylene | Phenol-based antioxidant | Sulfur-based antioxidant | Phosphorus-based antioxidant, | Neutralizing agent | | Metal silicate salt |
|---|---|---|---|---|---|---|---|
| Example 6 | 100 parts | (1-1) | (2-2) | (4-1) | (N-1) | | |
| | | 0.05 part | 0.05 part | 0.05 part | 0.001 part | | 0.5 part |
| Example 7 | 100 parts | (1-1) | (2-2) | (4-1) | (N-1) | | |
| | | 0.05 part | 0.05 part | 0.05 part | 0.05 part | | 0.5 part |
| Example 8 | 100 parts | (1-1) | (2-2) | (4-1) | (N-1) | | |
| | | 0.05 part | 0.05 part | 0.05 part | 0.1 part | | 0.5part |
| Example 9 | 100 parts | (1-1) | (2-2) | (4-1) | (N-1) | | |
| | | 0. 05 part | 0. 05 part | 0. 05 part | 0.3 part | | 0.5 part |
| Comparative Example 3 | 100 parts | (1-1) | (2-2) | (4-1) | (N-1) | | |
| | | 0.05 part | 0.05 part | 0.05 part | 0.000 part | | 0.5 part |
| Comparative Example 4 | 100 parts 100 parts | (1-1) | (2-2) | (4-1) | (N-1) | | |
| | | 0.05 part | 0.05 part | 0.05 part | 1.0 part | | 0.5 part |
| Comparative Example 5 | 100 parts 100 parts | (1-1) | (2-2) | (4-1) | (N-1) | (N-2) | |
| | | 0. 05 part | 0.05 part | 0.05 part | 0.05 part | 0.5 part | |

**Table 5**

| | Bending modulus (MPa) | Thermal deformation temperature (°C) | GO life (day) | Repetition extrusion MFR (g/10min) | Initial hue YI(-) | NOx coloration YI(-) | Gloss value (%) |
|---|---|---|---|---|---|---|---|
| Example. 6 | 922 | 102 | 34 | 44 | -2.7 | 1.7 | 76.0 |
| Example 7 | 929 | 98 | 32 | 42 | -2.9 | 3. 3 | 76.2 |
| Example 8 | 911 | 101 | - | 43 | -2.9 | 3. 9 | 77.4 |
| Example 9 | 894 | 99 | 26 | 47 | -2.9 | 4.2 | 77. 1 |
| Comparative Example 3 | 940 | 99 | 32 | 45 | -2.5 | 1.7 | 75.4 |
| Comparative Example 4 | 853 | 94 | 20 | 46 | -3.0 | 4.7 | 76.5 |
| Comparative Example 5 | 834 | 88 | 22 | 44 | -2.4 | 2.1 | 75.9 |

### (Examples 10 and 11, Comparative Examples 3 to 5)

As described in Table 6, by changing a kind of the antioxidant based on 100 parts of polypropylene, compositions and injection-molded specimens were obtained as in Example 1.

Assessment was performed as in Example 1, and results are shown in Table 7.

**Table 6**

| | polypropylene | Phenol-based antioxidant | Sulfur-based antioxidant | Phosphorus-based antioxidant | Neutralizing agent | Metal silicate salt |
|---|---|---|---|---|---|---|
| Example 10 | 100 parts | (1-1) | (2-2) | (4-1) | (N-2) | |
| | | 0.05 part | 0.05 part | 0.06 part | 0.05 part | 0.5 part |
| Example 11 | 100 parts | (1-1) | (2-1) | (3-1) | (N-2) | |
| | | 0.05 part | 0.1 part | 0.1 part | 0.05 part | 0.5 part |
| Comparative Example 6 | 100 parts | Not used | (2-2) | (4-1) | (N-1) | |
| | | | 0.1 part | 0.1 part | 0.05 part | 0.5 part |
| Comparative Example 7 | 100 parts | (1-2) | (2-2) | (4-1) | (N-1) | |
| | | 0.05 part | 0.05 part | 0.05 part | 0.05 part | 0.5 part |
| Comparative Example 8 | 100 parts | (1-1) 0.05 part | Not used | Not used | (N-1) 0.05 part | |
| | | | | | | 0.5 part |

**Table 7**

| | Banding modulus (MPa) | Thermal deformation temperature (°C) | GO embrittlement life (day) | Repetition extrusion MFR (g/10min) | Initial hue YI (-) | NOx coloration YI (-) |
|---|---|---|---|---|---|---|
| Example 10 | 95.1 | 98 | 34 | 30 | -1.5 | 2.66 |
| Example 11 | 930 | 101 | 30 | 32 | -1.2 | 1.85 |
| Comparative Example 6 | 906 | 96 | 8 | 40 | -2.2 | 4.94 |
| Comparative Example 7 | 892 | 99 | 22 | 34 | -2.1 | 6.49 |
| Comparative Example 8 | 917 | 97 | 7 | 53 | -1.3 | 6.37 |

From Tables 3, 5 and 7, it is seen that the polypropylene composition of the present invention is excellent in any performance of mechanical property, stability to thermal oxidation, and coloration resistance.

## Claims

1. A polypropylene composition comprising 0.001 to 0.5 part by weight of at least one kind of neutralizing agent selected from the group consisting of hydrotalcites, metal hydroxide and a carboxylic acid metal salt, 0.02 to 0.1 part by weight of a phenol-based antioxidant represented by the formula (1), 0.02 to 0.2 part by weight of a sulfnr-based antioxidant represented by the formula (2), 0.02 to 0.2 part by weight of at least one kind of phosphorus-based antioxidant selected from the group consisting of a compound represented by the formula (3) and a compound represented by the formula (4), 0.2 to 0.6 part by weight of a metal silicate salt, and 100 parts by weight of polypropylene, provided that, when a bisphenol A type glycidyl ether-based epoxide compound represented by the formula (5) and/or carboxylic acid amide having a carbon number of 8 to 50 are (is) contained in the composition, a content of the bisphenol A type glycidyl ether-based epoxide compound represented by the formula (5) is 0.001 part by weight or less, and a content of the carboxylic acid amide having a carbon number of 8 to 50 is 0.001 part by weight or less 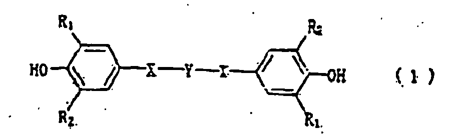 [in the formula (1), R₁s each represent independently a linear alkyl group having a carbon number of 1 to 8, or a branched alkyl group having a carbon number of 3 to 8, R₂s represent a methyl group, X represents a -C₂H₄COO- group, and Y represents a triethylene glycol residue or a 3,9-bis(1,1-dimethyl-2-hydroxyethyl)-2,4,8,10-tetraoxaspiro[5.5]undecane residue]
(R₃-A-S-C₂H₄CO₂)ₘ-Z (2)
[in the formula (2), R₃ represents an alkyl group having a carbon number of 12 to 18, A represents a single bond or a -C₂H₄CO₂-group, m represents an integer of 1 to 4, and Z represents a dodecyl alcohol residue, a tetradecyl alcohol residue, an octadecyl alcohol residue, or a pentaerythritol residue] 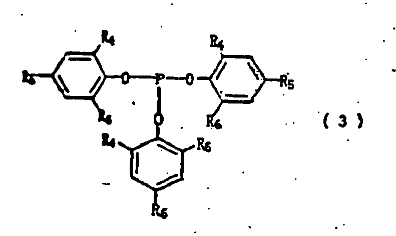 [in the formula (3), R₄s, R₅s and R₆s each represent independently a hydrogen atom, a linear alkyl group having a carbon number of 1 to 9, or a branched alkyl group having a carbon number of 3 to 9] 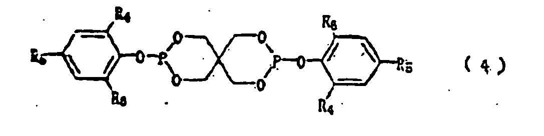 [in the formula (4), R₄s, R₅s and R₆s are as defined above] 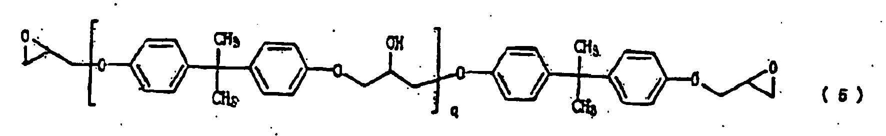 [in the formula (5), q represents a number of 0 or more]

2. The composition according to claim 1, wherein the composition does not substantially contain the bisphenol A type glycidyl ether-based epoxide compound represented by the formula (5) and the carboxylic acid amide having a carbon number of 8 to 50.

3. The composition according to claim 1, wherein the neutralizing agent is a carboxylic acid metal salt having a carbon number of 8 to 22.

4. The composition according to claim 1, wherein the neutralizing agent is hydrotalcites.

5. A method of stabilizing a polypropylene composition, comprising melt-kneading a composition comprising 0.001 to 0.5 part by weight of at least one kind of neutralizing agent selected from the group consisting of hydrotalcites, metal hydroxide and a carboxylic acid metal salt, 0.02 to 0.1 part by weight of a phenol-based antioxidant represented by the formula (1) as defined in claim 1, 0.02 to 0.2 part by weight of a sulfur-based antioxidant represented by the formula (2) as defined in claim 1, 0.02 to 0.2 part by weight of at least one kind of phosphorus-based antioxidant selected from the group consisting of a compound represented by the formula (3) as defined in claim 1 and a compound represented by the formula (4) as defined in claim 1, 0.2 to 0.6 part by weight of a metal silicate salt, and 100 parts by weight of polypropylene, provided that, when a bisphenol A type glycidyl ether-based epoxy compound represented by the formula (5) as defined in claim 1 and/or carboxylic acid amide having a carbon number of 8 to 50 are (is) contained in the composition, a content of the bisphenol A type glycidyl ether-based epoxy compound represented by the formula(5) is 0.001 part by weight or less, and a content of the carboxylic acid amide having a carbon number of 8 to 50 is 0.001 part by weight or less.

6. The method according to claim 5, wherein the composition does not substantially contain the bisphenol A type glycidyl ether-based epoxy compound represented by the formula (5) and the carboxylic acid amide having a carbon number of 8 to 50.

## Patentansprüche

1. Eine Polypropylenzusammensetzung, umfassend 0,001 bis 0,5 Gewichtsteile mindestens einer Art von Neutralisierungsmittel ausgewählt aus der Gruppe bestehend aus Hydrotalciten, Metallhydroxid und einem Carbonsäure-Metallsalz, 0,02 bis 0,1 Gewichtsteile eines Antioxidationsmittels auf Phenolbasis dargestellt durch die Formel (1), 0,02 bis 0,2 Gewichtsteile eines Antioxidationsmittels auf Schwefelbasis dargestellt durch die Formel (2), 0,02 bis 0,2 Gewichtsteile mindestens einer Art von Antioxidationsmittel auf Phosphorbasis ausgewählt aus der Gruppe bestehend aus einer Verbindung dargestellt durch die Formel (3) und einer Verbindung dargestellt durch die Formel (4), 0,2 bis 0,6 Gewichtsteile eines Metallsilikatsalzes und 100 Gewichtsteile Polypropylen, mit der Maßgabe, dass, wenn eine Epoxidverbindung auf Glycidyletherbasis vom Bisphenol A-Typ dargestellt durch die Formel (5) und/oder ein Carbonsäureamid mit 8 bis 50 Kohlenstoffatomen in der Zusammensetzung enthalten sind (ist), ein Gehalt der Epoxidverbindung auf Glycidyletherbasis vom Bisphenol A-Typ dargestellt durch die Formel (5) 0,001 Gewichtsteile oder weniger beträgt und ein Gehalt des Carbonsäureamids mit 8 bis 50 Kohlenstoffatomen 0,001 Gewichtsteile oder weniger beträgt 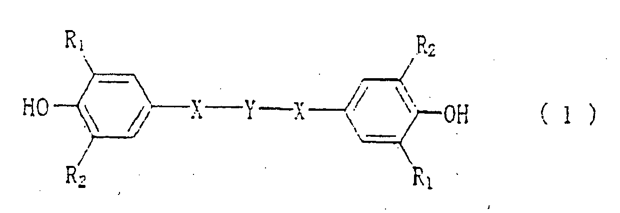 [in der Formel (1) stellt jeder der Reste R₁ unabhängig voneinander einen linearen Alkylrest mit 1 bis 8 Kohlenstoffatomen oder einen verzweigten Alkylrest mit 3 bis 8 Kohlenstoffatomen dar, die Reste R₂ stellen Methyl dar, X stellt einen Rest -C₂H₄COO- dar und Y stellt einen Triethylenglycolrest oder einen Rest 3,9-Bis(1,1-dimethyl-2-hydroxyethyl)-2,4,8,10-tetraoxaspiro[5.5]undecan dar]
(R₃-A-S-C₂H₄CO₂)ₘ-Z (2)
[in der Formel (2) stellt R₃ einen Alkylrest mit 12 bis 18 Kohlenstoffatomen dar, A stellt eine Einfachbindung oder einen Rest -C₂H₄CO₂- dar, m stellt eine ganze Zahl von 1 bis 4 dar und Z stellt einen Dodecylalkoholrest, einen Tetradecylalkoholrest, einen Octadecylalkoholrest oder einen Pentaerythritolrest dar] 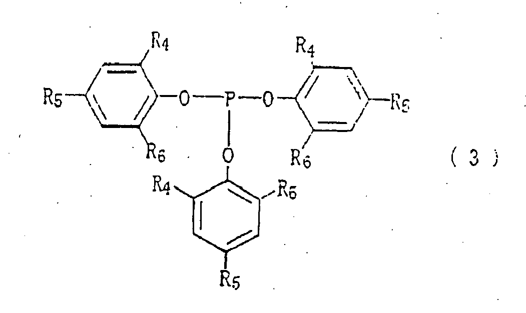 [in der Formel (3) stellen die Reste R₄, R₅ und R₆ jeweils unabhängig voneinander ein Wasserstoffatom, einen linearen Alkylrest mit 1 bis 9 Kohlenstoffatomen oder einen verzweigten Alkylrest mit 3 bis 9 Kohlenstoffatomen dar] 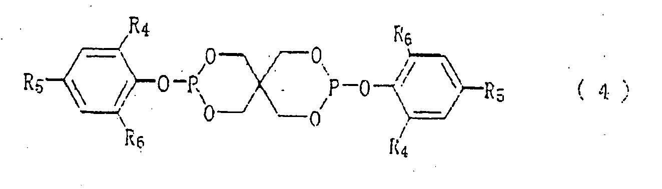 [in der Formel 4 sind die Reste R₄, R₅ und R₆ wie oben definiert] 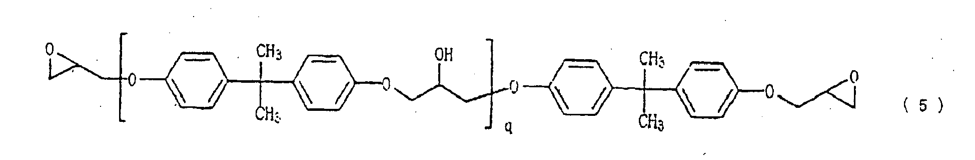 [in der Formel (5) stellt q eine Zahl von 0 oder mehr dar].

2. Die Zusammensetzung gemäß Anspruch 1, wobei die Zusammensetzung im Wesentlichen keine Epoxidverbindung auf Glycidyletherbasis vom Bisphenol A-Typ dargestellt durch die Formel (5) und im Wesentlichen kein Carbonsäureamid mit 8 bis 50 Kohlenstoffatomen enthält.

3. Die Zusammensetzung gemäß Anspruch 1, wobei das Neutralisierungsmittel ein Carbonsäure-Metallsalz mit 8 bis 22 Kohlenstoffatomen ist.

4. Die Zusammensetzung gemäß Anspruch 1, wobei das Neutralisierungsmittel Hydrotalcit ist.

5. Ein Verfahren zur Stabilisierung einer Polypropylenzusammensetzung, umfassend das Schmelzkneten einer Zusammensetzung, umfassend 0,001 bis 0,5 Gewichtsteile mindestens einer Art von Neutralisierungsmittel ausgewählt aus der Gruppe bestehend aus Hydrotalciten, Metallhydroxid und einem Carbonsäure-Metallsalz, 0,02 bis 0,1 Gewichtsteile eines Antioxidationsmittels auf Phenolbasis wie in Anspruch 1 definiert, 0,02 bis 0,2 Gewichtsteile eines Antioxidationsmittels auf Schwefelbasis dargestellt durch die Formel (2) wie in Anspruch 1 definiert, 0,02 bis 0,2 Gewichtsteile mindestens einer Art von Antioxidationsmittel auf Phosphorbasis ausgewählt aus der Gruppe bestehend aus einer Verbindung dargestellt durch die Formel (3) wie in Anspruch 1 defniert und einer Verbindung dargestellt durch die Formel (4) wie in Anspruch 1 definiert, 0,2 bis 0,6 Gewichtsteile eines Metallsilikatsalzes und 100 Gewichtsteile Polypropylen, mit der Maßgabe, dass, wenn eine Epoxidverbindung auf Glycidyletherbasis vom Bisphenol A-Typ dargestellt durch die Formel (5) wie in Anspruch 1 definiert und/oder ein Carbonsäureamid mit 8 bis 50 Kohlenstoffatomen in der Zusammensetzung enthalten sind (ist), ein Gehalt der Epoxidverbindung auf Glycidyletherbasis vom Bisphenol A-Typ dargestellt durch die Formel (5) 0,001 Gewichtsteile oder weniger beträgt, und ein Gehalt des Carbonsäureamids mit 8 bis 50 Kohlenstoffatomen 0,001 Gewichtsteile oder weniger beträgt.

6. Das Verfahren gemäß Anspruch 5, wobei die Zusammensetzung im Wesentlichen keine Epoxidverbindung auf Glycidyletherbasis vom Bisphenol A-Typ dargestellt durch die Formel (5) und im Wesentlichen kein Carbonsäureamid mit 8 bis 50 Kohlenstoffatomen enthält.

## Revendications

1. Composition de polypropylène comprenant de 0,001 à 0,5 partie en poids d'au moins un type d'agent de neutralisation choisi dans le groupe constitué des hydrotalcites, d'hydroxyde de métal et d'un sel de métal d'acide carboxylique, de 0,02 à 0,1 partie en poids d'un antioxydant à base de phénol représenté par la formule (1), de 0,02 à 0,2 partie en poids d'un antioxydant à base de soufre représenté par la formule (2), de 0,02 à 0,2 partie en poids d'au moins un type d'antioxydant à base de phosphore choisi dans le groupe constitué d'un composé représenté par la formule (3) et d'un composé représenté par la formule (4), de 0,2 à 0,6 partie en poids d'un sel de silicate de métal, et 100 parties en poids de polypropylène, à condition que, lorsque un composé d'époxyde à base de glycidyléther de type bisphénol A représenté par la formule (5) et/ou un amide d'acide carboxylique ayant de 8 à 50 atomes de carbone est(sont) contenu(s) dans la composition, une teneur du composé d'époxyde à base de glycidyléther de type bisphénol A représenté par la formule (5) est de 0,001 partie en poids ou inférieure et une teneur de l'amide d'acide carboxylique ayant de 8 à 50 atomes de carbone, est de 0,001 partie en poids ou inférieure. 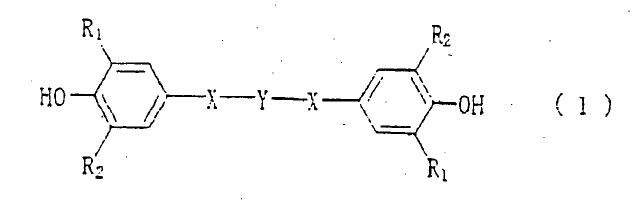 [dans la formule (1), R₁ représente à chaque fois indépendamment un groupe alkyle linéaire ayant de 1 à 8 atomes de carbone ou un groupe alkyle ramifié ayant de 3 à 8 atomes de carbone, les R₂ représentent un groupe méthyle, X représente un groupe -C₂H₄COO-, et Y représente un résidu de triéthylèneglycol ou un résidu de 3,9-bis(1,1-diméthyl-2-hydroxyéthyl)-2,4,8,10-tétraoxaspiro[5.5]undécane]
(R₃-A-S-C₂H₄CO₂)ₘ-Z (2)
[dans la formule (2), R₃ représente un groupe alkyle ayant de 12 à 18 atomes de carbone, A représente une liaison simple ou un groupe -C₂H₄CO₂-, m représente un nombre entier de 1 à 4, et Z représente un résidu d'alcool dodécylique, un résidu d'alcool tétradécylique, un résidu d'alcool octadécylique ou un résidu de pentaérythritol] 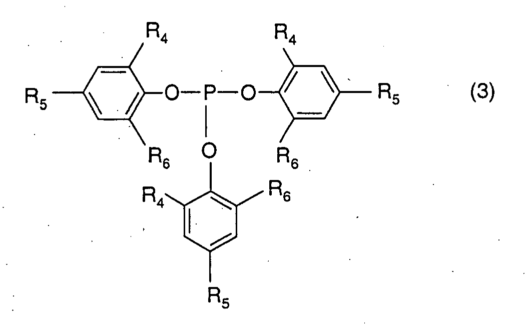 [dans la formule (3), les R₄, R₅ et R₆ représentent chacun indépendamment un atome d'hydrogène, un groupe alkyle linéaire ayant de 1 à 9 atomes de carbone ou un groupe alkyle ramifié ayant de 3 à 9 atomes de carbone] 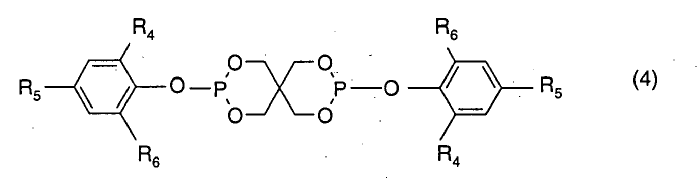 [dans la formule (4), les R₄, R₅ et R₆ sont comme défini ci-dessus] 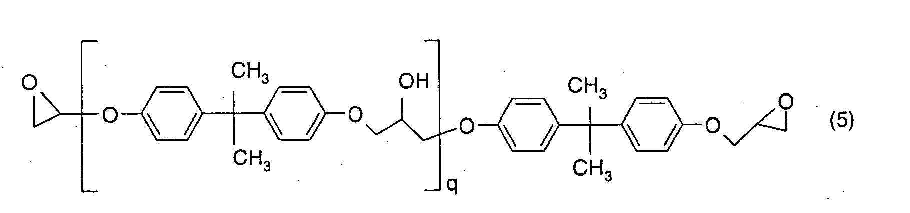 [dans la formule (5), q représente un nombre égal à 0 ou supérieur].

2. Composition selon la revendication 1, dans laquelle la composition ne contient pratiquement pas le composé d'époxyde à base de glycidyléther de type bisphénol A représenté par la formule (5) et l'amide d'acide carboxylique ayant de 8 à 50 atomes de carbone.

3. Composition selon la revendication 1, dans laquelle l'agent de neutralisation est un sel de métal d'acide carboxylique ayant de 8 à 22 atomes de carbone.

4. Composition selon la revendication 1, dans laquelle l'agent de neutralisation est constitué d'hydrotalcites.

5. Procédé de stabilisation d'une composition de polypropylène comprenant le malaxage à l'état de fusion d'une composition comprenant de 0,001 à 0,5 partie en poids d'au moins un type d'agent de neutralisation choisi dans le groupe constitué d'hydrotalcites, d'hydroxyde de métal et d'un sel de métal d'acide carboxylique, de 0,02 à 0,1 partie en poids d'un antioxydant à base de phénol représenté par la formule (1) comme défini dans la revendication 1, de 0,02 à 0,2 partie en poids d'un antioxydant à base de soufre représenté par la formule (2) comme défini dans la revendication 1, de 0,02 à 0,2 partie en poids d'au moins un type d'antioxydant à base de phosphore choisi dans le groupe constitué d'un composé représenté par la formule (3) comme défini dans la revendication 1 et d'un composé représenté par la formule (4) comme défini dans la revendication 1, de 0,2 à 0,6 partie en poids d'un sel de silicate de métal, et 100 parties en poids de polypropylène, à condition que, lorsqu'un composé époxy à base de glycidyléther de type bisphénol A représenté par la formule (5) comme défini dans la revendication 1 et/ou un amide d'acide carboxylique ayant de 8 à 50 atomes de carbone est(sont) contenu(s) dans la composition, une teneur du composé époxy à base de glycidyléther de type bisphénol (A) représenté par la formule (5) est de 0,001 partie en poids ou inférieure et une teneur de l'amide d'acide carboxylique ayant de 8 à 50 atomes de carbone est de 0,001 partie en poids ou inférieure.

6. Procédé selon la revendication 5, dans lequel la composition ne contient pratiquement pas le composé époxy à base de glycidyléther de type bisphénol A représenté par la formule (5) et l'amide d'acide carboxylique ayant de 8 à 50 atomes de carbone.
